# EUROPEAN PATENT SPECIFICATION

(11) **EP 1 995 350 B1**
(45) Date of publication and mention of the grant of the patent: **28.07.2010**
(21) Application number: 08007148.3
(22) Date of filing: 10.04.2008
(51) Int. Cl.: C23C 28/00, C23C 30/00, C22C 19/05, F01D 5/28

(54) **High temperature component with thermal barrier coating**
Hochtemperatur-Komponente mit Wärmedämmschicht
Composant haute température avec revêtement de barrière thermique

(30) Priority: 18.04.2007 JP 2007108801
(43) Date of publication of application: 26.11.2008
(73) Proprietor: Hitachi, Ltd., Chiyoda-ku Tokyo 100-8280 (JP)
(72) Inventor: Arikawa, Hideyuki, Tokyo 100-8220 (JP); Mebata, Akira, Tokyo 100-8220 (JP); Kojima, Yoshitaka, Tokyo 100-8220 (JP); Ichikawa, Kunihiro, Tokyo 100-8220 (JP)
(74) Representative: Kirschner, Klaus Dieter

(56) References cited:
- EP-A- 0 208 487
- EP-A- 0 789 087
- EP-A- 1 640 477
- FR-A- 2 737 504
- GB-A- 1 426 438
- GB-A- 2 182 347
- JP-A- 9 272 933
- US-A- 3 869 779

## Description

The present invention relates to a high temperature component with a thermal barrier coating for a gas turbine.

The operation temperature of gas turbines has been increasing year by year in order to improve efficiency. In order to deal with such an increase in the temperature, a casting of a Ni-based superalloy which has excellent high temperature strength is used for a part of the gas turbine component, and, in order to further increase the high temperature strength as a casting, a columnar grain which is a directionally solidified body and a single crystal are used in addition to a conventional casting (for instance JP-A No. 1997-272933).

Moreover, for the purpose of decreasing the temperature of a gas turbine component, a thermal barrier coating including a ceramic (hereinafter, it is called TBC) is applied to the surface of the component. Over a heat resistant alloy, a TBC is generally formed of a MCrAlY alloy layer which has excellent oxidation resistance and a zirconia (ZrO2) system ceramic layer which has excellent low thermal conductivity (for instance JP-A No. 1987-211387).

In the MCrAlY alloy, M is an element selected from the group of Fe, Ni, and Co, and Cr is chromium, Al aluminum, and Y yttrium.

Moreover, since a gas turbine component where a TBC is provided over a casting of a superalloy containing Ni as a main component (Ni-based superalloy) has extremely excellent high temperature strength, it is mostly applied to a component where high temperature strength is required (for instance, blades and vanes, etc.).

Although it depends on the conditions of use, it is generally understood that the temperature of a heat resistant alloy can be decreased by 50 to 100 °C by applying the TBC, so that applying a TBC to a casting of Ni-based superalloy is very effective.

In EP-A-1 640 477, there is disclosed a high temperature component with a thermal barrier coating, which can be used as a high temperature component for a gas turbine, an aircraft gas turbine engine, or the like. A top coat is formed of a ceramic on a bond coat, the bond coat being formed on a heat resistant alloy composed mainly of at least one element of nickel and cobalt, wherein the bond coat contains at least one of nickel and cobalt, chromium and aluminum , and further contains at least one selected from a group consisting of tantalum, cesium, tungsten, silicon, platinum, manganese and boron in a range of 0 to 20 wt%. The high temperature component is supposed to have very high durability of a thermal-insulating ceramic layer, and is less susceptible to spalling damage.

The FR-A-2 737 504 discloses the use of NiCrAl bond coats on hight temperature components having three superimposed layers of metal and/or ceramic material to take up thermal and mechanical stress.

In order to provide a high strength Ni-base superalloy for directionally solidified castings, which is prevented from solidification cracking at the casting, having a sufficient grain boundary strength for ensuring reliability during its operation and a superior high temperature concurrently, a high strength Ni-base superalloy for directionally solidified castings having a superior grain boundary strength, which contains C: 0.05 % to less than 0.1 %, B: 0.015 % to 0.04 %, Hf: 0.01 to less than 0.5 %, Zr: less than 0.01 %, Cr: 1.5 % to 16 %, Mo: utmost 6 %, W: 2 to 12 %, Re: 0.1 to 9 %, Ta: 2 to 12 %, Nb: utmost 4 %, Al: 4.5 to 6.5 %, Ti: less than 0.5 %, Co: less than 9 %, and Ni: at least 60 % in weight, is disclosed in EP-A-0 789 087.

To produce a high-strength Ni-base superalloy for directional solidification, having excellent high temperature strength as well as grain boundary strength sufficient to prevent the occurrence of solidification crack at the time of casting and further secure reliability during use, the JP 09 272933 discloses an alloy comprising a high strength Ni-base superalloy for directional solidification, excellent in grain boundary strength, having a composition containing, by weight, 0.03-0.2% C, 0.004 to 0.05% B, ≤ 1.5% Hf, ≤ 0.01% Zr, 1.5 to 16% Cr, ≤6% Mo, 2 to 12% W, 0.1-9% Re, 2-12% Ta, ≤ 4% Nb, 4.0-6.5% Al, <0.4% Ti, ≤ 9% Co, and ≤ 60% Ni.

In GB-A-2 182 347 the alloy has a base of nickel and/or cobalt or iron and comprises 20-40 Cr; 6-12 Al; 0.5-12 Si (weight percent). A specific alloy for marine turbine use is 35 Cr-8 Al-8 Si balance Ni (weight percent). The coating is deposited by sputter ion plating, or alternatively by plasma spraying or electro-deposition.

According to US-A-3 869 779 the surface of a metallic base system is initially coated with a metallic alloy layer that is ductile and oxidation resistant. An aluminide coating is then applied to the metallic alloy layer. The chemistry of the metallic alloy layer is such that the oxidation resistance of the subsequently aluminized outermost layer is not seriously degraded

According to EP-A-0 208 487a coating is formed on a substrate by sputter ion plating wherein a DC glow discharge is generated under soft vacuum conditions in the presence of the substrate and of a cathode constituted by the coating material thereby to release material at the cathode by ion bombardment, which released material diffuses to the substrate to form the coating thereon, and wherein a potential is applied to the substrate during coating. The coating material comprises a MCrAISi allow (where M is a single metal or combination of metals selected from the group consisting of nickel, cobalt and iron) and the potential is in the form of an AC bias in order to control the properties of the coating. It is thereby possible to coat uniformly subtrates having sharp edges such as aerofoil components. Moreover, the coatings are found to possess outstanding corrosion resistance properties.

GB 1426438 (A) discloses an alloy adapted for use as a coating on a nickel-base or cobalt-base superalloy comprising from 12.5- to 20% by weight chromium, from 4% to 6% silicon, from 2 to 8% aluminium, from 0 to 10-/,tit2nium, from O to 0.25% yttrium or equivalent rare earth metals, from 0 to 20% iron, from 0 to 4% niobium, from 0 to 4% molybdenum, from O to 5% manganese, the elements iron, niobium, molybdenum or manganese boxing present singly or in combinations such as to produce little or no deleterious effect on the corrosion resistance, from O to 03.5% cobalt and 0 to balance of nickel, the remainder being impurities. The alloy are supposed to have improved sulphidation and oxidation resistance at elevated temperatures especially for marine gas turbine applications. The coatings may be applied by flame or plasma spraying vacuum deposition or by applying a powdered composition and melting in situ.

The following two problems arise in a gas turbine component where a TBC is applied to a casting of a Ni-based superalloy used under severe heat load conditions.

One problem is that, during operation at high temperatures, an interface oxide layer which is formed at the interface between the top coat composed of a ceramic (ceramic top coat) and the alloy bond coat is grown by oxidizing the bond coat composed of metal, and spalling damage of the ceramic top coat is easily created.

Specifically, the growth of an interface oxide layer is accelerated in a gas turbine operating at high temperatures, and the ceramic top coat is easily peeled off starting from the grown interface oxide layer by the thermal stress which is caused by the difference in the thermal expansion from the alloy bonding layer and the rapid temperature change when the gas turbine starts and stops.

Another problem is that interdiffusion occurs due to the difference of the alloy compositions between the alloy bond coat and the Ni-based superalloy casting, thereby an affected layer is formed over the surface of the Ni-based superalloy casting (the face making contact with the alloy bonding layer).

Since the affected layer resulting from interdiffusion is generally brittle and the strength thereof is small, there is a possibility that the mechanical properties of the heat resistant alloy are decreased. The decrease of the mechanical properties of the heat resistant alloy caused by the affected layer becomes more noticeable in a columnar grain and a single crystal rather than a conventional casting. This is due to the high temperature strength being improved to the limit by combining the alloy composition with the composition controlled by directional solidification in the columnar grain and the single crystal, so that they become sensitive to the change in the composition due to diffusion.

Various corrective strategies are individually proposed for these two problems.

For instance, for the former problem, an alloy bond coat is disclosed in JP-A No. 2006-097042 where the growth of the interface oxide layer can be controlled.

Moreover, for the latter problem, a method is disclosed in which a deleterious affected layer caused by diffusion between the heat resistant alloy and the coating layer is decreased by coating an aluminum layer through a carbon containing layer over the surface of the casting of a single crystal Ni-bases superalloy in, for instance JP-A No. 2005-133206.

However, these conventional methods were not sufficient from the viewpoint of improving two problems at the same time.

Moreover, although a method for solving these two problems at the same time is considered by performing a combination of these conventional methods, it has not been easy to perform a combination of these conventional methods in practical application because of the problem of material combination, restrictions on the process, and the restrictions on cost.

Therefore, a gas turbine component where a TBC is applied to a Ni-based super alloy, specifically, columnar grain, and single crystal has extremely excellent high temperature strength but it does not have sufficient durability and reliability during long time operation.

It is an objective of the present invention to provide a gas turbine component or a gas turbine blade or the like component with a thermal barrier layer over a Ni-based superalloy, which overcomes these two problems at the same time and has enough durability and reliability during long time operation.

This object is achieved by the component according to claim 1. Preferred embodiments of the invention are characterized in the sub-claims.

According to one aspect of the present invention, it is possible to provide a high temperature component wherein the growth of the interface oxide which is formed at the interface between the alloy bond coat and the ceramic top coat is suppressed and the growth of the interdiffusion affected layer which is formed at the interface between the alloy bond coat and the Ni-based heat resistant alloy can be suppressed by making a component of the alloy bond coat be one which is difficult to mutually diffuse with the Ni-based heat resistant alloy.

Embodiments of the invention are now described with reference to the drawings.
Fig. 1 is a schematic cross-sectional drawing illustrating a high temperature component of an embodiment of this mode.
Fig. 2 is a schematic cross-sectional drawing illustrating a damaged component with a conventional TBC after oxidation.
Fig. 3 is a schematic cross-sectional drawing illustrating a high temperature component with a TBC of this mode after oxidation.
Fig. 4 is a perspective view illustrating a turbine blade with a TBC of this mode.
Fig. 5 is a schematic drawing illustrating full scale heating test equipment.

The heat resistant alloy of one aspect of the present invention is a single crystal Ni-based superalloy.

Moreover, a preferable Ni-based superalloy contains C: 0.03 to 0.20 %, B: 0.004 to 0.050 %, Hf: 0.01 to 1.50 %, Zr: 0 to 0.02 %, Cr: 1.5 to 16.0 %, Mo: 0.4 to 6.0 %, W: 2 to 12 %, Re: 0.1 to 9.0 %, Ta: 2 to 12 %, Nb: 0.3 to 4.0 %, Al: 4.0 to 6.5%, Ti: 0 to 0.4 %, and Co: 0.5 to 9.0 % by weight, and the remainder is composed essentially of Ni.

The bond coat includes Ni as a main component and can include Cr in the range from 10 to 40 wt.%, Al in the range from 5 to 20 wt.%, and Si in the range from 0.5 to 2.0 wt.%, and where the remainder is formed of an alloy which is an unavoidable impurity.

The top coat should preferably be formed of an oxide system ceramic; the oxide system ceramic is preferably a partially stabilized zirconia; and the partially stabilized zirconia is preferably an yttria partially stabilized zirconia.

Furthermore, the high temperature component with a thermal barrier coating, which is an embodiment of the present invention preferably has the following combination of the heat resistant alloy, the bond coat, and the ceramic top coat.

Specifically, the heat resistant alloy is an alloy which contains C: 0.03 % or more and 0.20 % or less, B: 0.004 % or more and 0.050 % or less, Hf: 0.01 % or more and 1.50 % or less, Zr: 0 % or more and 0.02 % or less, Cr: 1.5 % or more and 16.0 % or less, Mo: 0.4 % or more and 6.0 % or less, W: 2 % or more and 12% or less, Re: 0.1 % or more and 9.0 % or less, Ta: 2% or more and 12 % or less, Nb: 0.3% or more and 4.0 %or less, Al:4.0 % or more and 6.5 % or less, Ti: 0 % or more and 0.4 % or less, Co: 0.5 % or more and 9.0 % or less by weight and where the remainder is composed essentially of Ni; the bond coat includes Ni as a main component, Cr, and Al, and can include Si in the range from 0 to 10 wt.%, and the remainder is formed of an alloy which is an unavoidable impurity; and the ceramic top coat is formed of an oxide ceramic which includes zirconium oxide as a main component.

Especially, the bond coat is an alloy containing Ni as a main component, Cr in the range from 10 to 40 wt.%, Al in the range from 5 to 20 wt.%, and Si in the range from 0.5 to 2.0 wt.%, and where the remainder is formed of an alloy which is an unavoidable impurity.

According to embodiments of the present invention, it is possible to provide a gas turbine component with a TBC over a Ni-based superalloy, which has sufficient durability and reliability during long time operation.

A high temperature component with a thermal barrier coating of the present invention has superior durability and reliability and makes it possible to increase the gas turbine operation temperature and increase efficiency under the conditions of using a gas turbine, compared with a high temperature component with a thermal barrier coating where a ceramic top coat is formed over an alloy bond coat composed of a conventional MCrAlY alloy.

### [Embodiments of the invention]

The inventors discussed the interdiffusion between the Ni-based heat resistant alloy and the MCrAlY alloy layer.

A diffusion couple is manufactured by using the MCrAlY alloy and Ni-based superalloy and the interdiffusion is investigated at a high temperature. As a result, it was found out that the affected layer formed in the Ni-based heat resistant alloy grows thicker when Co is contained in the MCrAlY alloy.

From this knowledge and the knowledge where the growth of the interface oxide layer is suppressed by using an alloy bond coat in which an element which oxidizes more easily than Al is not contained, the invention could be obtained.

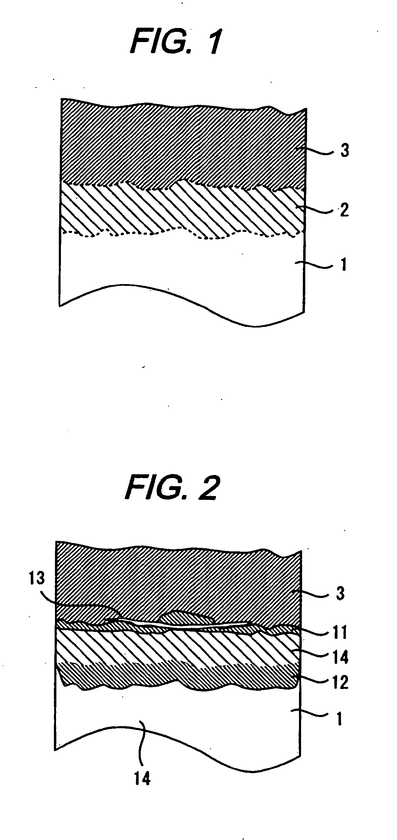

In a high temperature component of the present invention, as shown in Fig. 1, a ceramic top coat 3 is formed over the surface of a Ni-based heat resistant alloy 1 through the alloy bond coat which includes Ni as a main component, Cr, and Al, and can include Si in the range from 0 to 10 wt.%, and where the remainder is formed of an alloy which is an unavoidable impurity.

In a high temperature component with a TBC of the prior art, as shown in Fig. 2, an interface oxide layer 11 is grown at the interface between the MCrAlY alloy bond coat 4 and the ceramic top coat 3 and an interface affected layer 12 is grown by the interdiffusion at the interface between the MCrAlY alloy bond coat 4 and the Ni-based heat resistant alloy 1 by using it for a long time at high temperature.

When the interface oxide layer 11 is grown and the thickness thereof increases, new thermal stress is produced in the ceramic top coat 3 by accumulation of stress caused by the volume expansion during oxidation of the metallic element and changes in the thermal and mechanical properties caused by the transformation from a metal to an oxide, etc. As a result, damage is easily created in the ceramic top coat 3.

Moreover, with an increase in the thickness, it becomes easy to produce internal damage within the interface oxide layer 11. Furthermore, with growth of the interface oxide layer 11, Al in the MCrAlY alloy bond coat 4 is lost by oxidation of Al and oxidation of Cr, Ni, and Co finally occurs. The volume expansion of Cr, Ni, and Co is greater than that of Al when they are oxidized and, moreover, a relatively porous oxide is formed. When it becomes such a state, internal damage is produced within the interface oxide layer 11 and spalling damage 13 of the ceramic top coat 3 is created as a result.

Moreover, the interface affected layer 12 formed at the surface of the Ni-based heat resistant alloy 1 by the interdiffusion with the MCrAlY alloy bond coat 4 is generally brittle and has low strength, so that there is a possibility that the mechanical properties of the Ni-based heat resistant alloy 1 will decrease, specifically the fatigue strength. When the thickness of the interface affected layer 12 becomes thicker, fatigue cracks 14 are easily produced in the Ni-based heat resistant alloy 1.

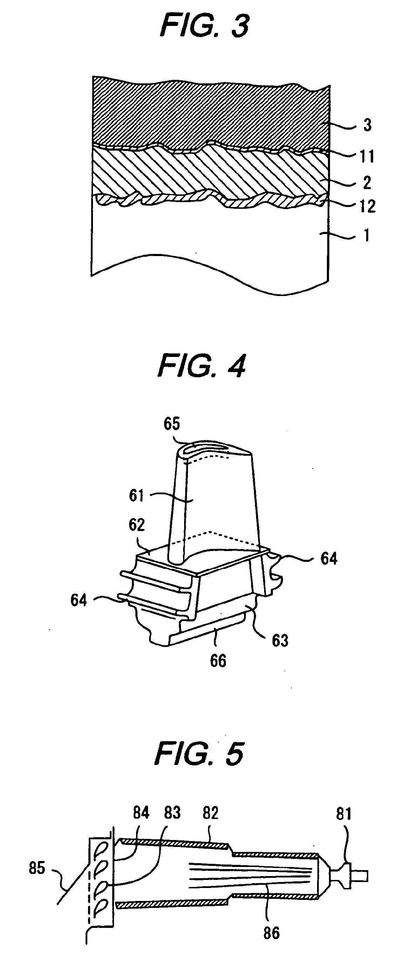

On the other hand, in a high temperature component with a TBC of the present invention, as shown in Fig. 3, high durability and high reliability can be achieved compared with Fig. 2 because the growth of the interface affected layer 12 formed by the interdiffusion between the alloy bond coat 2 and the Ni-based heat resistant alloy 1 is suppressed.

A single crystal is the most preferable as the Ni-based heat resistant alloy 1.

This is due to the fact that a single crystal has the most excellent high temperature strength but the decrease of the mechanical properties of the Ni-based heat resistant alloy 1 brought about by the effect of the interface affected layer 12 which is formed by the interdiffusion with the alloy bond coat 2 is greater than that of other castings when the TBC is applied.

Although the effects become smaller compared with a single crystal, a columnar grain and a conventional casting may be used for the Ni-based heat resistant alloy 1.

It is preferable that an alloy used for the bond coat practically includes Ni as a main component, Cr, and Al. In addition, Si may be included in the range from 0 to 10 wt.%, preferably, from 0.5 to 2.0 wt.%. It is preferable that Ni from 50 to 75 wt.%, Cr from 5 to 40 wt.%, preferably, from 10 to 40 wt.%, and Al from 1 to 30 wt.%, preferably, from 5 to 20 wt.% be included.

For the alloy for forming the bond coat, Ni is the base component for forming the bond coat; the same alloy system as the Ni-based heat resistant alloy is used; and it preferably contains 50 to 75 wt.% for the purposes of decreasing the mismatch of the thermal expansion, etc. and the concentration gradient of the component with the base material.

When it is less than 50 wt.%, a bond coat with excellent ductility is hardly formed, the concentration gradient with the base material becomes greater, and the interface affected layer caused by the interdiffusion is easily formed.

When it is greater than 75 wt.%, corrosion resistance and oxidation resistance are decreased because the contents of Cr and Al become smaller. Cr and Al are elements for forming a protective oxide film which has corrosion resistance and oxidation resistance, and Cr mainly contributes to corrosion resistance and Al to oxidation resistance.

When the Cr content is less than 5 wt.% and the Al content is less than 1 wt.%, there is no effect to improve corrosion resistance and oxidation resistance and, when the Cr content is more than 40 wt.% and the Al content is more than 20 wt.%, the film becomes easily embrittled.

Moreover, Si has an effect of fixing the impurities in the bond coat and of improving the adhesion between the base material and the bond coat and adhesion of the protective oxide film, and can be included in the range from 0 to 10 wt.%. When it is greater than 10 wt.%, it is not preferable because the film becomes embrittled and a harmful phase is created.

It is the most preferable that the bond coat be formed by using a low-pressure plasma spray. However, it is possible to use a high velocity gas thermal spray such as a high velocity oxy-fuel spray (HVOF) and a high velocity air-fuel spray (HVAF).

In the case of thermal spraying, there is a possibility that materials are contaminated by the container, crucible, and atomization nozzle, etc. made of a metal or a ceramic in the manufacturing process of alloy powder. Moreover, during spraying, there is a possibility that a material is contaminated by the electrode and atomization nozzle, etc. made of a metal.

A ceramic used for the ceramic top coat 3 is preferably a ceramic including zirconium oxide, that is, a ZrO2 system ceramic. Specifically, a partially stabilized zirconia containing at least one selected from the group of Y2O3, MgO, CaO, CeO2, Sc2O3, Er2O3, Gd2O3, Yb2O3, Al2O3, SiO2, and La2O3 is preferable. Yttria partially stabilized zirconia is extremely preferable.

As a method for improving the durability of the TBC, a method for controlling crack propagation of the ceramic top coat 3 by making the ceramic top coat 3 porous using an atmospheric plasma spray, a method for relieving the thermal stress by producing vertical cracks in the ceramic top coat 3, and a method for relieving the thermal stress by making the ceramic top coat 3 a columnar structure using electron beam physical vapor deposition and separating between the columnar structures are known. In this mode, these treatments can be applied to the ceramic top coat 3.

### Embodiment 1, an alternative to the invention

As a test piece base material, a disk-shaped single crystal Ni-based superalloy (C: 0.03 % or more and 0.20 % or less, B: 0.004 % or more and 0.050 % or less, Hf: 0.01 % or more and 1.50 % or less, Zr: 0 % or more and 0.02 % or less, Cr: 1.5 % or more and 16.0 % or less, Mo: 0.4 % or more and 6.0 % or less, W: 2 % or more and 12 % or less, Re: 0.1 % or more and 9.0 % or less, Ta: 2 % or more and 12 % or less, Nb: 0.3 % or more and 4.0 % or less, Al: 4.0 % or more and 6.5 % or less, Ti: 0 % or more and less than 0.4 %, Co: 0.5 % or more and 9.0 % or less by weight, and the remainder is practically Ni, concretely, C: 0.11 %, B: 0.025 %, Hf: 0.75 %, Zr: 0.01 %, Cr: 7.5 %, Mo: 2.8 %, W: 6 %, Re: 4.5 %, Ta: 6.5 %, Nb: 2.1 %, Al: 5.2 %, Ti: 0.2 %, Co: 4.5 % by weight and the remainder is essentially Ni) with a diameter of 25 mm and a thickness of 5 mm is used. A bond coat was formed over the surface thereof by a low-pressure plasma spray using a NiCrAl alloy (Ni-22 wt.%Cr-10 wt.%Al) and a heat treatment was performed as a diffusion heat treatment in vacuum at 1080 °C for 4 hours.

The thickness of the bond coat is about 100 m. After that, a ceramic top coat having a thickness of about 200 m was provided by an atmospheric plasma spray using yttria partially stabilized zirconia (ZrO2-8 wt.%Y2O3) powder over a base material where a bond coat was provided.

In order to evaluate the growth suppression effect of the interface oxide which was formed at the interface between the MCrAlY alloy layer and the ceramic top coat and the interface affected layer which was formed by the interdiffusion at the interface between the MCrAlY alloy layer and the Ni-based heat resistant alloy, the atmospheric oxidation test was performed on the manufactured test piece at 950 °C for 1000 hours.

The results are shown in No.1 in Table 1.

As a comparison, a test piece where the material of the bond coat is a CoNiCrAlY alloy (Co-32 wt.%Ni-21 wt.%Cr-8 wt.%Al-0.5 wt.%Y) was manufactured and shown as No. 2 in the table.

**Table 1**

| Test piece | | | After an oxidation test under 950°C×1000h | |
|---|---|---|---|---|
| | | | Thickness of interface oxide layer (µm) | Thickness of interface affected layer (µm) |
| No. 1 | This mode | Bond coat: NiCrAl al loy | 3 | 40 |
| No. 2 | Comparative Example | Bond coat: CoNiCrAlY alloy | 6 | 90 |

As clearly shown in Table 1, the interface oxide layer and the interface affected layer of the test piece No. 1 of this mode are grown to be thicknesses of not greater than half of the test piece No. 2 of the comparative example and it is understood that it has an excellent growth suppression effect of the interface oxide layer and the interface affected layer.

### Embodiment 2

Using the same test piece base material as the first embodiment, a bond coat was formed over the surface thereof by a low-pressure plasma spray using a NiCrAl alloy (Ni-22 wt.%Cr-10 wt.%Al) powder and a NiCrAlSi alloy (Ni-22 wt.%Cr-10 wt.%Al-1 wt.%Si) powder of this mode, and a heat treatment was performed as a diffusion heat treatment in vacuum at 1080 °C for 4 hours.

The thickness of the bond coat is about 100 µm. After that, a top layer of an yttria partially stabilized zirconia (ZrO2-8 wt.%Y2O3) was formed over the base material where the bond coat was provided to be about 200 µm by using the following four methods.

Second method: a porous top coat with a porosity of about 20% is formed by using an atmospheric plasma spray.

Third method: a top coat with vertical cracks is formed by using an atmospheric plasma spray.

Fourth method: a top coat with a columnar structure is formed by using electron beam physical vapor deposition.

Durability of the TBC was evaluated by applying a thermal cycling test to these test pieces where a procedure of keeping them at a temperature of 1100 °C for ten hours in atmosphere and cooling them down to 200 °C was repeated.

Table 2 shows the number of repetitions until a ceramic layer of the test piece peeled off.

It is assumed that the condition defining spalling creation is the point where the spalling area of the ceramic layer becomes 20% or more of the whole body and the number of repetitions up to that point was obtained.

As a comparative example, the results of the test pieces where a CoNiCrAl alloy (Co-32 wt.%Ni-21 wt.%Cr-8 wt.%Al-0.5 wt.%Y) was used for the material of the bond coat were also shown in Table 2.

As clearly shown in Table 2, it is understood that the TBC of this mode has more excellent heat resistant cycle properties compared with the comparative example and has an improvement effect on the durability caused by the growth suppression effect of the interface oxide layer when the manufacturing process of the ceramic top coat is the same.

Moreover, compared with the difference of the method for forming the ceramic top coat, it is understood that the third method and the fourth method are almost equal to each other and have excellent heat resistant cycle properties, and that the second method and the first method come, in order.

As shown in Table 2, the spalling part of each test piece was inside of the ceramic top coat in the case of the first method and the second method, and it was the vicinity of the interface oxide layer in the case of the third method and the fourth method. This is due to the fact that damage in the ceramic top coat hardly occurs due to stress relaxation caused by the vertical cracks (the third method) and the columnar structure (the fourth method) in the ceramic top coats of the third method and the fourth method, so that spalling of the ceramic top coat is created in the vicinity of the interface oxide layer.

Therefore, it is considered that the growth suppression effect of the interface oxide layer appears more noticeably in the ceramic top layers of the third method and the fourth method.

Moreover, when the thicknesses of the interface affected layers of the base materials at the point where they are peeled off, the growth of the interface affected layer of this mode is more suppressed than that of the comparative example (for instance, No. 6 and No. 12 were compared as to where they were peeled off in the same number of cycles).

**Table 2, No. 5 - No. 8 are embodiments according to the invention**

| Test piece | | | Number of cycle that peels off | Thickness of interface oxide (µm) | Spalling part | Thickness of affected layer of base material (µm) |
|---|---|---|---|---|---|---|
| No.1 | Embodiment | Bond coat: NiCrAl alloy | 25 | 2 | Inside of ceramic top coat | 30 |
| | | Top coat: Atmospheric spray (porosity of 10%) | | | | |
| No.2 | Embodiment | Bond coat : NiCrAl alloy | 60 | 5 | Inside of ceramic top coat | 50 |
| | | Top coat : Atmospheric spray (porous) | | | | |
| No.3 | Embodiment | Bond coat: HiCrAl alloy | 150 | 13 | Vicinity of interface | 75 |
| | | Top coat: Atmospheric spray (vertical crack) | | | oxide layer | |
| No.4 | Embodiment | Bond coat: MiCrAl alloy | 160 | 14 | Vicinity of interface | 80 |
| | | Top coat: Electron beam deposition (columnar structure) | | | oxide layer | |
| No. 5 | Embodiment | Bond coat: NiCrAlSi alloy | 30 | 2 | Inside of ceramic top coat | 40 |
| | | Top cost: Atmospheric spray (porosity of 10%) | | | | |
| No.6 | Embodiment | Bond coat: NiCrAlSi alloy | 70 | 6 | Inside of ceramic top coat | 50 |
| | | Top coat: Atmospheric spray (porous) | | | | |
| No.7 | Embodiment | Bond coat: NiCrAlSi alloy | 160 | 14 | Vicinity of interface | 80 |
| | | Top coat: Atmospheric spray (vertical crack) | | | oxide layer | |
| No.8 | Embodiment | Bond coat: NiCrAlSi alloy | 180 | 15 | Vicinity of interface | 90 |
| | | Top coat: Electron beam deposition (columnar structure) | | | oxide layer | |
| No.9 | Comparative example | Bond coat: CoNiCrAlY alloy | 20 | 1 | Inside of ceramic top coat 50 | |
| | | Top coat: Atmospheric spray (porosity of 10%) | | | | |
| No.10 | Comparative example | Bond coat: CoNiCrAlY alloy | 45 | 2 | Inside of ceramic top coat 90 | |
| | | Top coat: Atmospheric spray (porous) | | | | |
| No.11 | Comparative example | Bond coat: CoNiCrAlY alloy | 85 | 13 | Vicinity of interface | 115 |
| | | Top coat: Atmospheric spray (vertical crack) | | | oxide layer | |
| No.12 | Comparative example | Bond coat: CoNiCrAlY alloy | 70 | 13 | Vicinity of interface | 125 |
| | | Top coat: Electron beam deposition (columnar structure) | | | oxide layer | |

### Embodiment 3

A gas turbine blade with a TBC of this mode was manufactured. Fig. 4 is a perspective view illustrating the whole structure of a gas turbine blade.

In Fig. 4, this gas turbine blade is formed of a single crystal of a Ni-based superalloy (the same as the composition shown in the Ni-based superalloy of the first embodiment) and, for instance, used as a first stage blade in the rotating part of a gas turbine which has third step blades, and it has an airfoil 61, a platform 62, a shank 63, a seal fin 64, and a tip pocket 65, and is attached at a disk through a dovetail 66.

Moreover, this gas turbine blade has a 100 mm long airfoil 61 and is 120 mm long from the platform 42 on, and a cooling hole (not shown in the figure) is provided in the gas turbine blade from the dovetail 66 through the airfoil 61 in order to cool it from the inside and pass through coolant, in particular, air or steam.

This gas turbine blade is the most excellent in the first stage and can be provided for a gas turbine blade of a stage later than the second stage. A TBC of this mode is formed over the airfoil 61 and the platform 62 which are exposed to a combustion gas in this gas turbine blade.

The deposition method is almost the same as the second embodiment and a bond coat with a thickness of about 200 µm was formed over the surface of the gas turbine blade by a low-pressure plasma spray using a NiCrAlSi alloy (Ni-22 wt.%Cr-10 wt.%Al-1 wt.%Si) powder, and about 300 µm thick ceramic top coat of yttria partially stabilized zirconia (ZrO2-8 wt.%Y2O3) with a vertical crack structure was provided thereon by an atmospheric plasma spray.

In order to simulate the oxidation state after long time operation, a thermal load test was performed on the gas turbine blade manufactured like this by using full scale heating test equipment after performing an oxidation treatment at 1000 °C for 1000 hours.

The test equipment is one where the combustion gas 86 under high temperature and high pressure generated at the combustion nozzle 81 is introduced to the combustion liner 82 and exhausted from the exhaust heat duct 85 by heating the test blade 83 provided at the blade stand 84 and inside of the test blade 83 is cooled by cooling airflow, so that a test simulating a full scale thermal load can be performed.

The testing conditions are a combustion temperature of a maximum of 1500 °C, a cooling airflow temperature of 170 °C, and a pressure of 8 atmospheres. Using a turbine blade where a thermocouple was set in the leading edge of the test blade 83, the temperature of the base material of the turbine blade while being heated was measured and the heat flux was obtained, resulting in a maximum of 3.0 MW/m2.

As a comparison, a turbine blade was also formed with a bond coat of CoNiCrAl alloy (Co-32 wt.%Ni-21 wt.%Cr-8 wt.%Al-0.5 wt.%Y).

When the temperature of the combustion gas is 1000 °C (heat flux of 0.9 MW/m2), no damage was observed in the TBC of both the turbine blade of this mode and the turbine blade of the comparative example after ten repetitive cycles of starting-up, holding steady, and stopping.

However, when the temperature of the combustion gas is 1300 °C (heat flux of 1.5 MW/m2), spalling damage of the ceramic top coat was observed in a part of blade's leading edge and in the blade suction side of the turbine blade of the comparable example after ten repetitive cycles. The turbine blade of this mode was fine.

In addition, when the temperature of the combustion gas is 1500 °C (heat flux of 3.0 MW/m2), the turbine blade of this mode was fine even after ten repetitive cycles.

As one from the comparative example, the damaged area of the blade's leading edge and the blade suction side expanded in comparison with the case of heating at 1300 °C, and spalling damage was observed at a part of the blade pressure side.

Accordingly, it is understood that a turbine blade with a TBC of this mode has more excellent durability than a turbine blade of the comparative example.

A high temperature component with a ceramic thermal barrier coating of the present invention has excellent durability at high temperatures. Therefore, it is suitable for a thermal barrier coating for a gas turbine blade, a vane, and combustor, etc.

Moreover, it can be applied as an anticorrosion coating to not only gas turbines but also aircraft engines.

## Claims

1. A high temperature component comprising,
a heat resistant alloy base material;
a bond coat bonded to the surface of the alloy base material; and
a thermal barrier coating where a top coat composed of a ceramic is provided over the surface of a heat resistant alloy through a bond coat composed of an alloy,
wherein said heat resistant alloy base material is a single crystal (SC) Ni-based superalloy; and
wherein said bond coat includes Ni as a main component and includes Cr in the range from 10 to 40 wt.%, Al in the range from 5 to 20 wt.%, and Si in the range from 0.5 to 2.0 wt.%, and the remainder is formed of an alloy which is an unavoidable impurity..

2. A high temperature component according to claims 1 to 4, wherein said Ni-based superalloy includes C: 0.03 to 0.20%, B: 0.004 to 0.050%, Hf: 0.01 to 1.50%, Zr: 0 to 0.02%, Cr: 1.5 to 6.0%, Mo: 0.4 to 6.0%, W :2 to 12%, Re: 0.1 to 9.0%, Ta: 2 to 12%, Nb: 0.3 to 4.0%, Al: 4.0 to 6.5% and Ti: 0 to 0.4%, Co: 0.5 to 9.0% by weight with the remainder being composed essentially of Ni.

3. A high temperature component according to claim 1, wherein said top coat is formed of an oxide ceramic.

4. A high temperature component according to claim 7, wherein said oxide ceramic includes partially stabilized zirconia.

5. A high temperature component according to any of the claims 1 to 3, wherein said partially stabilized zirconia includes an yttria partially stabilized zirconia.

6. A high temperature component according to claim 1 or 2, wherein
said heat resistant alloy includes C: 0.03 % or more and 0.20 % or less, B: 0.004 % or more and 0.050 % or less, Hf: 0.01 % or more and 1.50 % or less, Zr: 0 % or more and 0.02 % or less, Cr: 1.5 % or more and 16.0 % or less, Mo: 0.4% or more and 6.0 % or less, W: 2% or more and 12 % or less, Re: 0.1 % or more and 9.0 % or less, Ta: 2% or more and 12 % or less, Nb:0.3 % or more and 4.0 % or less, Al: 4.0 % or more and 6.5 % or less, Ti: 0 % or more and 0.4 % or less, Co: 0.5 % or more and 9 % or less by weight with the remainder being Ni.

## Patentansprüche

1. Hochtemperatur-Komponente umfassend:
ein wärmebeständiges Legierungs-Basismaterial;
eine Haftverbindungsschicht, die mit der Oberfläche des Legierungs-Basismaterials verbunden ist; und
eine Wärmedämmschicht, wobei eine obere Schicht zusammengesetzt aus einem Keramikmaterial über der Oberfläche einer wärmewiderstandsfähigen Legierung durch eine Haftverbindungsschicht zusammengesetzt aus einer Legierung versehen ist,
wobei das wärmebeständige Legierungs-Basismaterial eine Einkristall (SC = single crystal) - Superlegierung auf Nickelbasis ist; und
wobei die Haftverbindungsschicht Nickel als Hauptkomponente umfasst: und enthält: Cr im Bereich von 10 bis 40 Gewichtsprozent, Al im Bereich von 5 bis 20 Gewichtsprozent und Si im Bereich von 0,5 bis 2,0 Gewichtsprozent, und wobei der Rest aus einer Legierung gebildet ist, die eine unvermeidbare Verunreinigung ist.

2. Hochtemperatur-Komponente nach Anspruch 1, worin die Superlegierung auf Nickelbasis umfasst: C: 0,003 bis 0,20 Gewichtsprozent, B: 0,004 bis 0,050 Gewichtsprozent, Hf: 0,01 bis 1,50 Gewichtsprozent, Zr: 0 bis 0,02 Gewichtsprozent, Cr: 1,5 bis 16,0 Gewichtsprozent, Mo: 0,4 bis 6,0 Gewichtsprozent, W: 2 bis12 Gewichtsprozent; Re: 0,1 bis 9,0 Gewichtsprozent, Ta: 2 bis 12 Gewichtsprozent, Nb: 0,3 bis 4,0 Gewichtsprozent, Al: 4,0 bis 6,5 Gewichtsprozent and Ti: 0 bis 0,4 Gewichtsprozent, Co: 0,5 bis 9,0 Gewichtsprozent, wobei der Rest im Wesentlichen aus Ni zusammengesetzt ist.

3. Hochtemperatur-Komponente nach Anspruch 1, worin die obere Schicht aus einer Oxidkeramik gebildet ist.

4. Hochtemperatur-Komponente nach Anspruch 3, worin die Oxidkeramik teilweise stabilisiertes Zirkonoxid umfasst.

5. Hochtemperatur-Komponente nach Anspruch 4, worin das teilweise stabilisierte Zirkonoxid ein mit Ytriumxid teilweise stabilisiertes Zirkonoxid umfasst.

6. Hochtemperatur-Komponente nach Anspruch 1 oder 2, worin die wärmebeständige Legierung umfasst: C: 0,003 Gewichtsprozent oder mehr und 0,20 Gewichtsprozent oder weniger, B: 0,004 Gewichtsprozent oder mehr und 0,050 Gewichtsprozent oder weniger, Hf: 0,01 Gewichtsprozent oder mehr und 1,50 Gewichtsprozent oder weniger, Zr: 0 Gewichtsprozent oder mehr und 0,02 Gewichtsprozent oder weniger, Cr: 1,5 Gewichtsprozent oder mehr und 16,0 Gewichtsprozent oder weniger, Mo: 0,4 Gewichtsprozent oder mehr und 6,0 Gewichtsprozent oder weniger, W: 2 Gewichtsprozent oder mehr und 12 Gewichtsprozent oder weniger, Re: 0,1 Gewichtsprozent oder mehr und 9,0 Gewichtsprozent oder weniger, Ta: 2 Gewichtsprozent oder mehr und 12 Gewichtsprozent oder weniger, Nb: 0,3 Gewichtsprozent oder mehr und 4,0 Gewichtsprozent oder weniger, Al: 4,0 Gewichtsprozent oder mehr und 6,5 Gewichtsprozent oder weniger, Ti: 0 Gewichtsprozent oder mehr und 0,4 Gewichtsprozent oder weniger, Co: 0,5 Gewichtsprozent oder mehr und 9 Gewichtsprozent oder weniger, wobei der Rest Nickel ist.

## Revendications

1. Composant haute température comprenant,
- un matériel à base d'alliage résistant à chaleur;
- une couche de liaison liée à la surface du matériel à base d'alliage; et
- un revêtement de barrière thermique où une couche supérieure composée d'une céramique est pourvue sur la surface d'un alliage résistant à chaleur par une couche de liaison composée d'un alliage,
- où ledit matériel à base d'alliage résistant à chaleur est un superalliage monocristallin à base de Ni; et
- où ladite couche de liaison comprend du Ni comme un composant principal et comprend du Cr dans la rangée de 10 à 40% en poids, Al dans la rangée de 5 à 20% en poids, et Si dans la rangée de 0,5 à 2,0 en poids, et le résidu est formé d'un alliage qui est d'une impureté inévitable.

2. Composant haute température selon les revendications 1 à 4, où ledit superalliage à base de Ni comprend C: 0,03% à 0,20%, B: 0,004% à 0,050%, Hf: 0,01 à 1,50%, Zr: 0% à 0,02%, Cr: 1,5% à 16,0%, Mo: 0,4 à 6,0%, W: 2 à 12%, Re: 0,1 à 9,0%, Ta: 2 à 12%, Nb: 0,3 à 4,0%, Al: 4,0 à 6,5% et Ti: 0 à 0,4%, Co: 0,5 à 9,0% en poids avec le résidu étant composé essentiellement de Ni.

3. Composant haute température selon la revendication 1, où ladite couche supérieure est formée d'une céramique oxyde.

4. Composant haute température selon la revendication 7, où ladite céramique oxyde comprend l'oxyde de zirconium stabilisé partiellement.

5. Composant haute température selon l'une quelconque des revendications 1 à 3, où ledit oxyde de zirconium stabilisé partiellement comprend l'oxyde de zirconium à yttrium stabilisé partiellement.

6. Composant haute température selon la revendication 1 ou 2, où ledit alliage résistant à chaleur comprend C: 0,03% ou plus et 0,20% ou moins, B: 0,004% ou plus et 0,050% ou moins, Hf: 0,01 % ou plus et 1,50% ou moins, Zr: 0% ou plus et 0,02% ou moins, Cr: 1,5% ou plus et 16,0% ou moins, Mo: 0,4% ou plus et 6,0% ou moins, W: 2% ou plus et 12% ou moins, Re: 0,1% ou plus et 9,0% ou moins, Ta: 2% ou plus et 12% ou moins, Nb: 0,3% ou plus et 4,0% ou moins, Al: 4,0% ou plus et 6,5% ou moins, Ti: 0% ou plus et 0,04% ou moins, Co: 0,5% ou plus et 9% ou moins en poids avec le résidu étant Ni.
